# EUROPÄISCHE PATENTSCHRIFT

(11) **EP 1 464 425 B1**
(45) Veröffentlichungstag und Bekanntmachung des Hinweises auf die Patenterteilung: **28.03.2007**
(21) Anmeldenummer: 04003115.5
(22) Anmeldetag: 12.02.2004
(51) Int. Cl.: B23B 31/12

(54) **Schnellspannfutter**
Quick release chuck
Mandrin à action rapide

(30) Priorität: 04.04.2003 DE 10315407
(43) Veröffentlichungstag der Anmeldung: 06.10.2004
(73) Patentinhaber: ROBERT BOSCH GMBH, 70442 Stuttgart (DE)
(72) Erfinder: Hoffmann, Erhard, 70771 Leinfelden-Echterdigen (DE); Hecht, Joachim, 71106 Magstadt (DE); Keusch, Siegfried, 73779 Deizisau (DE)

(56) Entgegenhaltungen:
- EP-A- 1 380 372
- DE-C- 347 557
- US-A- 2 544 088
- US-A- 5 624 125
- US-A- 5 741 016

## Beschreibung

### Stand der Technik

Die Erfindung geht aus von einem Schnellspannfutter nach dem Oberbegriff des Anspruchs 1.

Aus der DE 101 09 490 A1 ist ein gattungsbildendes Schnellspannfutter für eine Handwerkzeugmaschine bekannt, das eine Steuervorrichtung zur Steuerung von Arretiermitteln aufweist, die zur Aufnahme einer Spannabstützkraft dienen. Das Schnellspannfutter weist eine axial verschiebbare Betätigungshülse auf, die mit einem schwenkbar gelagerten Knebel der Steuervorrichtung gekoppelt ist. Wird die Betätigungshülse in eine von einem Aufnahmebereich des Schnellspannfutters abgewandte, axiale Richtung nach hinten verschoben, wird der Knebel verschwenkt, wodurch über ein Übertragungsmittel zwischen den von Tellerfedern gebildeten Arretiermitteln und einem Grundkörper des Schnellspannfutters eine Kraftschlussverbindung zur Aufnahme der Spannabstützkraft hergestellt wird. Ferner ist aus der US 2 544 088 ein Schnellspannfutter für eine Handwerkzeugmaschine bekannt, die eine Steuervorrichtung mit einem Steuermittel zur Steuerung von Arretiermitteln umfasst. Dabei werden die Steuermittel von hebelartigen Elementen gebildet.

Vorteile der Erfindung

Die Erfindung geht aus von einem Schnellspannfutter, insbesondere für eine Handwerkzeugmaschine, mit einem Betätigungselement und mit einer Steuervorrichtung, die zumindest ein Steuermittel zur Steuerung zumindest eines Arretiermittels aufweist, das zur Aufnahme einer Spannabstützkraft dient, wobei über das von der Steuervorrichtung steuerbare Arretiermittel eine Formschlußverbindung zur Aufnahme des Spannabstützkraft herstellbar ist.

Es wird vorgeschlagen, dass das Steuermittel als Ring ausgeführt ist und relativ zum Arretiermittel verdrehbar gelagert ist. Es kann ein besonders komfortables und einfach zu bedienendes Schnellspannfutter erzielt werden. Große Betätigungskräfte zur kraftschlüssigen Fixierung des Arretiermittels können vermieden und es kann ein geringer Verschleiß des Arretiermittels über eine lange Lebensdauer erzielt werden. Es kann eine hohe Schlagbohrfestigkeit erreicht bzw. kann ein Werkzeug sicher mit einer hohen, für einen Schlagbohrbetrieb geeigneten Spannkraft im Schnellspannfutter gesichert werden.

Ferner kann eine bestimmte Abfolge von Verfahrensschritten durch die Steuervorrichtung einfach sichergestellt werden, wodurch eine mehrteilig ausgeführte Betätigungseinrichtung und/oder von einem Bediener durchzuführende, komplizierte Betätigungsabfolgen vermeidbar sind.

Ist das Arretiermittel in radialer Richtung bewegbar gelagert, kann dieses platzsparend integriert und konstruktiv einfach über ein Steuermittel gesteuert werden, wie über ein relativ zum Arretiermittel verdrehbares Steuermittel, das als Ring ausgeführt und innerhalb dem das Arretiermittel platzsparend angeordnet werden kann. Grundsätzlich ist jedoch auch denkbar, dass das Arretiermittel alternativ oder zusätzlich in Umfangsrichtung und/oder in axialer Richtung bewegbar gelagert ausgeführt ist.

In einer weiteren Ausgestaltung der Erfindung wird vorgeschlagen, dass das Arretiermittel in zumindest einer Betriebsstellung durch wenigstens ein Federelement belastet ist. Ein ungewünschtes Verklemmen des Arretiermittels kann vermieden und das Arretiermittel kann zudem vorteilhaft zur Findung von vorteilhaften Fixierstellungen genutzt werden. Hierfür können ein oder mehrere Arretiermittel radial nach außen und/oder ein oder mehrere Arretiermittel radial nach innen belastet sein.

Ist das Betätigungselement zum Spannen eines Werkzeugs drehbar gelagert, können konstruktiv einfach, insbesondere über Gewindeverbindungen, vorteilhafte Übersetzungen erzielt und es können mit kleinen Betätigungskräften große Spannkräfte erzielt werden. Durch die Steuervorrichtung kann einfach erreicht werden, dass zum Spannen das Betätigungselement vorteilhaft weniger als um 250° verdreht werden muss, so dass ein besonders komfortables Spannen eines Werkzeugs erreichbar ist. Grundsätzlich ist jedoch auch denkbar, dass anstatt Gewindeverbindungen Hebelmechanismen usw. eingesetzt werden.

Vorteilhaft ist das Betätigungselement in axialer Richtung verschiebbar gelagert, wodurch eine axiale Betätigung einer Schnellverstellung zugeordnet und eine einfache, selbsterklärende Bedienung erreicht werden kann.

Ferner wird vorgeschlagen, dass das Betätigungselement über zumindest einen Betätigungsbereich vom Steuermittel der Steuervorrichtung wirkungsmäßig entkoppelbar ist. Enge Toleranzen und damit verbundene ungewünschte Auswirkungen, wie hohe Herstellkosten, Schmutzempfindlichkeit usw., können vermieden werden. Es kann vorteilhaft erst verriegelt und dann gespannt werden. Eine konstruktiv einfache Lösung kann dabei insbesondere erreicht werden, wenn das Betätigungselement über eine Verriegelungsfeder mit dem Steuermittel koppel- und entkoppelbar ist.

Die Verriegelungsfeder kann dabei von verschiedenen, dem Fachmann als geeignet erscheinenden Federarten gebildet sein, wie beispielsweise von einer Schraubendruckfeder usw. Weist die Verriegelungsfeder jedoch im Wesentlichen eine ringförmige Gestalt auf, kann diese besonders platzsparend integriert werden.

In einer weiteren Ausgestaltung wird vorgeschlagen, dass das Schnellspannfutter zumindest einen in wenigstens einer Betriebsstellung über ein Federelement in axialer Richtung belasteten Spannbacken aufweist. Es kann ein automatisches Schließen des Schnellspannfutters bis zu einem bestimmten Grad erreicht und der Komfort kann gesteigert werden.

Weist das Schnellspannfutter zumindest einen in wenigstens einer Betriebsstellung über ein Mittel in radialer Richtung, insbesondere in radialer Richtung nach innen, belasteten Spannbacken auf, kann ein ungewünschtes Verklemmen des Spannbackens sicher vermieden werden. Das Mittel kann dabei von einem Übertragungsmittel mit einer Schrägfläche und/oder von einem Federmittel usw. gebildet sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schlagbohrmaschine mit einem erfindungsgemäßen Schnellspannfutter,
- Fig. 2: einen Längsschnitt durch ein erfindungsgemäßes Schnellspannfutter schräg von oben mit einem Werkzeug, das einen kleinen Durchmesser aufweist,
- Fig. 3: das Schnellspannfutter aus Fig. 2 mit einem Werkzeug, das einen großen Durchmesser aufweist,
- Fig. 4: einen Spannbacken des Schnellspannfutters in einer Einzeldarstellung,
- Fig. 5: einen Steuerring des Schnellspannfutters in einer Einzeldarstellung,
- Fig. 6: einen Längsschnitt durch ein alternatives Schnellspannfutter mit einer von einem Steuerring entkoppelbaren Betätigungshülse,
- Fig. 7: einen Querschnitt durch das Schnellspannfutter aus Fig. 6 entlang der Linie VII-VII,
- Fig. 8: einen Querschnitt durch das Schnellspannfutter aus Fig. 6 entlang der Linie VIII-VIII und
- Fig. 9: einen Querschnitt durch das Schnellspannfutter aus Fig. 6 entlang der Linie IX-IX.

### Beschreibung der Ausführungsbeispiele

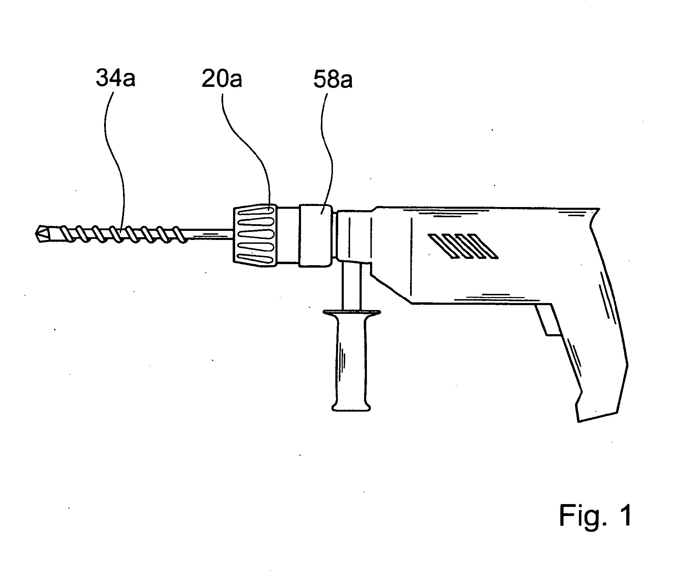

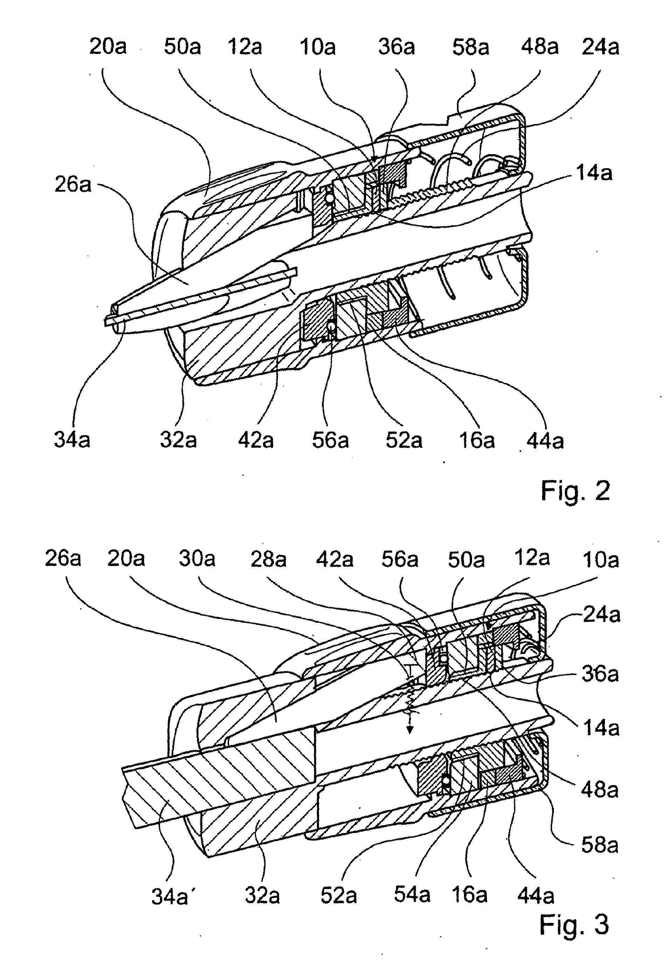

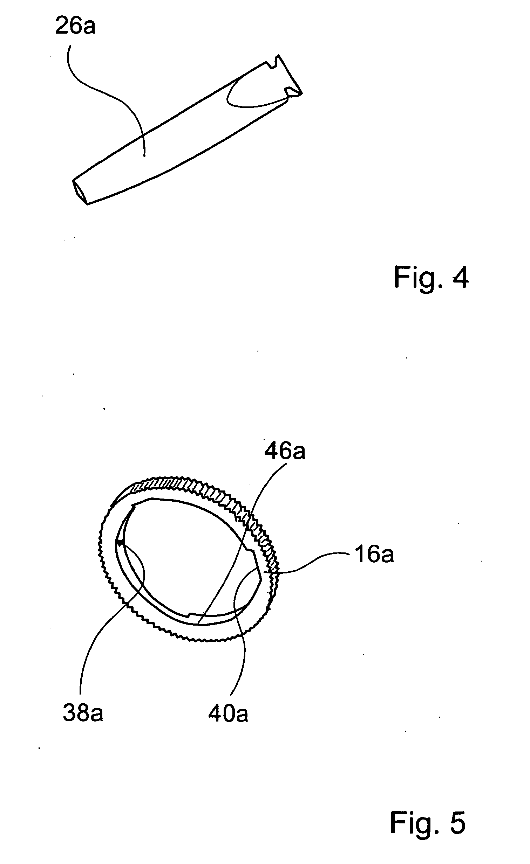

Fig. 1 zeigt eine Schlagbohrmaschine mit einem erfindungsgemäßen Schnellspannfutter. Das Schnellspannfutter umfasst einen Grundkörper 32a, in dem drei gleichmäßig über den Umfang verteilte Spannbacken 26a in zum freien Ende radial schräg nach innen verlaufenden Ausnehmungen verschiebbar gelagert sind (Fig. 2 bis 4). Mit einer drehbar und axial verschiebbar gelagerten Betätigungshülse 20a sind über die Spannbacken 26a Werkzeuge 34a, 34a' mit unterschiedlichen Durchmessern spannbar.

Die aus Kunststoff hergestellte Betätigungshülse 20a ist über eine angeformte Innenverzahnung und über eine Außenverzahnung eines radial innerhalb der Betätigungshülse 20a angeordneten Steuerrings 16a einer Steuervorrichtung 10a drehfest mit demselben verbunden. Über am Innenumfang des Steuerrings 16a angeformte Steuerkurven 38a sind im radial Inneren des Steuerrings 16a über den Umfang gleichmäßig verteilte und in einer Fixierhülse 36a in radialer Richtung verschiebbar gelagerte Arretiermittel 12a steuerbar, die zur Aufnahme einer Spannabstützkraft dienen.

Befindet sich die Betätigungshülse 20a in Richtung zum freien Ende betrachtet in einer definierten, einer Öffnungsstellung zugeordneten Endstellung entgegen dem Uhrzeigersinn, liegt der Steuerring 16a mit ersten Teilabschnitten 40a der Steuerkurven 38a über den Arretiermitteln 12a, in denen der Steuerring 16a einen relativ großen Innendurchmesser aufweist, so dass die Arretiermittel 12a nach außen beweglich sind.

Soll ein Werkzeug 34a in das Schnellspannfutter eingeführt werden, wird die Betätigungshülse 20a in die vom freien Ende abgewandte Richtung axial nach hinten gezogen, wodurch die über eine Führungshülse 42a in axialer Richtung formschlüssig mit der Betätigungshülse 20a gekoppelten Spannbacken 26a in die vom freien Ende abgewandte Richtung nach hinten und radial nach außen geführt werden.

Die Führungshülse 42a ist auf dem Grundkörper 32a axial verschiebbar gelagert und ist über eine nicht näher dargestellte Formschlussverbindung mit dem Grundkörper 32a drehfest verbunden. Grundsätzlich könnte die Führungshülse 42a jedoch auch drehbar zum Grundkörper 32a gelagert sein. Anstatt die Betätigungshülse 20a nach hinten zu ziehen, könnte mit dem Werkzeug 34a auch auf freie Enden der Spannbacken 26a gedrückt und die Spannbacken 26a könnten in axialer Richtung in das Schnellspannfutter eingeschoben werden, und zwar soweit, bis das Werkzeug 34a zwischen die Spannbacken 26a eingeführt werden kann.

Ist das Werkzeug 34a zwischen die Spannbacken 26a eingeführt und wird die Betätigungshülse 20a vom Bediener losgelassen, wird dieselbe über eine Schraubendruckfeder 24a in Richtung zum feien Ende des Schnellspannfutters geschoben. Die Schraubendruckfeder 24a ist dabei an einer Abdeckhülse 58a abgestützt und wirkt über einen Haltering 44a, der zur Sicherung der Arretiermittel 12a in der Fixierhülse 36a in die vom freien Ende abgewandte axiale Richtung dient, auf die Betätigungshülse 20a, die wiederum mit einer Axialkraft über die Führungshülse 42a auf die Spannbacken 26a wirkt. Bei einem Überdrehen des Steuerrings 16a, d.h. bei einem Verdrehwinkel größer als 120°, kommt der Haltering 44a zum Einsatz. Die Arretiermittel 12a werden vom Haltering 44a im Eingriff gehalten. Durch die Axialkraft werden die Spannbacken 26a entlang Schrägflächen der Ausnehmungen im Grundkörper 32a radial nach innen geführt und sichern das Werkzeug 34a mit einer kleiner Spannkraft.

Zum manuellen Spannen des Werkzeugs 34a mit einer für den Betrieb ausgelegten Spannkraft wird die Betätigungshülse 20a, in Richtung zum freien Ende betrachtet, im Uhrzeigersinn gedreht. Grundsätzlich ist auch denkbar, dass das Werkzeug 34a mit einer Drehbewegung entgegen dem Uhrzeigersinn gespannt wird, beispielsweise mit einem Linksgewinde. Der drehfest mit der Betätigungshülse 20a verbundene Steuerring 16a wird dabei relativ zu den Arretiermitteln 12a und zur Fixierhülse 36a verdreht, die auf dem Grundkörper 32a axial verschiebbar gelagert und über eine nicht näher dargestellte Formschlussverbindung drehfest mit dem Grundkörper 32a gekoppelt ist.

Durch die Relativbewegung zwischen dem Steuerring 16a und den Arretiermitteln 12a kommen die Steuerkurven 38a mit zweiten Teilabschnitten 46a über den Arretiermitteln 12a zum Liegen, in denen der Steuerring 16a einen relativ kleinen Innendurchmesser aufweist. Die Arretiermittel 12a werden über den Steuerring 16a mit ihren radial nach innen weisenden, angespitzten Enden jeweils in an einen Außenumfang des Grundkörpers 32a angeformte Verzahnungen 48a gedrückt.

Es wird über die von der Steuervorrichtung 10a steuerbaren Arretiermittel 12a eine Formschlussverbindung 14a zur Aufnahme der Spannabstützkräfte hergestellt, und zwar in axialer Richtung zwischen den Arretiermitteln 12a und dem Grundkörper 32a.

Durch die Drehbewegung der Betätigungshülse 20a wird zudem eine drehfest mit der Betätigungshülse 20a gekoppelte Spannhülse 54a relativ zur Fixierhülse 36a verdreht, wobei die Spannhülse 54a über ein angeformtes Innengewinde 50a und über ein Außengewinde 52a der Fixierhülse 36a mit derselben gekoppelt ist.

Die Drehbewegung der Spannhülse 54a führt infolge der Gewinde 50a, 52a zu einer axialen Bewegung der Spannhülse 54a und dieselbe wirkt mit einer Axialkraft über ein Axiallager 56a und über die Führungshülse 42a auf die Spannbacken 26a, die entlang der Schrägflächen der Ausnehmungen im Grundkörper 32a radial nach innen gedrückt werden und das Werkzeug 34a spannen.

Zum Lösen des Schnellspannfutters wird die Betätigungshülse 20a, in Richtung zum freien Ende des Schnellspannfutters betrachtet, entgegen dem Uhrzeigersinn gedreht. Die Spannhülse 54a wird in die vom freien Ende abgewandte Richtung geführt, und die Spannkraft wird bis auf die von der Schraubendruckfeder 24a verursachte Spannkraft aufgehoben. Ferner werden die ersten Teilabschnitte 40a der Steuerkurven 38a über die Arretiermittel 12a geführt, und die Arretiermittel 12a werden in radialer Richtung nach außen freigegeben.

Die Betätigungshülse 20a kann in die vom freien Ende abgewandte Richtung axial nach hinten gezogen und das Schnellspannfutter kann vollständig geöffnet werden, wobei die radial nach innen weisenden, angespitzten Enden der Arretiermittel 12a in der Weise auf die Verzahnungen 48a abgestimmt sind, dass diese beim nach hinten Ziehen der Betätigungshülse 20a überrasten.

Um zu vermeiden, dass sich die Spannbacken 26a in den Ausnehmungen des Grundkörpers 32a verkanten, können diese durch ein oder mehrere Mittel 28a, 30a in radialer Richtung nach innen belastet werden, beispielsweise über ein oder mehrere von Federelementen gebildete Mittel 30a oder über ein von einer an die Führungshülse 42a angeformte Abschrägung gebildetes Mittel 28a und/oder über ein von einer an die Spannbacken 26a angeformte Abschrägung gebildetes Mittel usw., wie dies in Fig. 3 schematisch angedeutet ist.

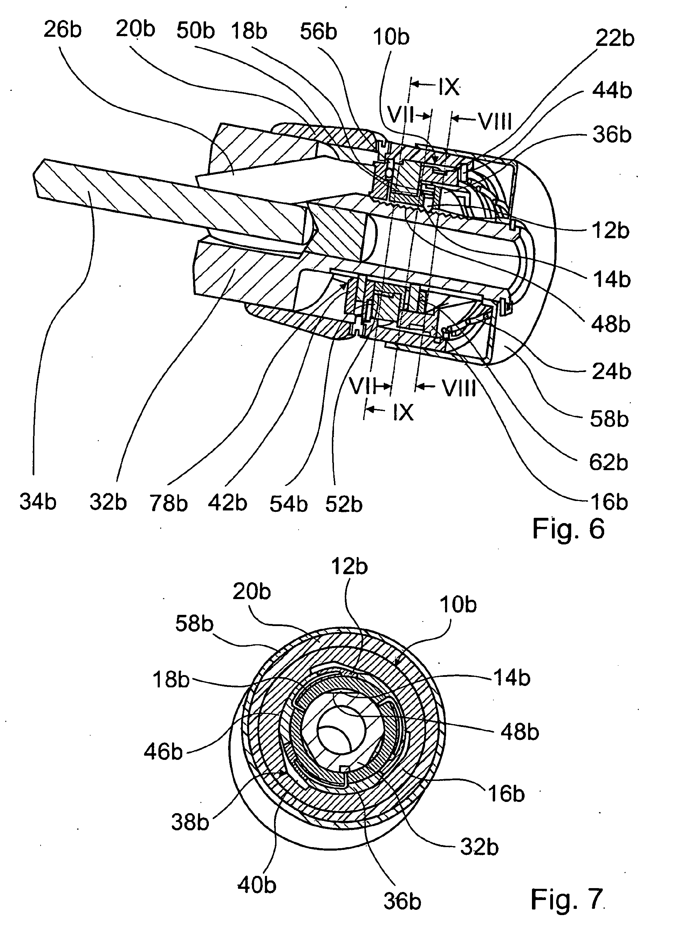

In den Fig. 6 bis 9 ist ein alternatives Schnellspannfutter dargestellt. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele die Buchstaben "a" und "b" hinzugefügt sind. Ferner kann bezüglich gleichbleibender Merkmale und Funktionen grundsätzlich auf die Beschreibung zum Ausführungsbeispiel in den Fig. 1 bis 5 verwiesen werden.

Das Schnellspannfutter weist eine Betätigungshülse 20b auf, die über einen Betätigungsbereich von einem Steuerring 16b einer Steuervorrichtung 10b wirkungsmäßig entkoppelbar ist, und zwar über eine Verriegelungsfeder 22b, die von einem bandförmigen Federstahl gebildet ist, im Wesentlichen eine ringförmige Gestalt aufweist und in einer Umfangsnut des Steuerrings 16b angeordnet ist.

Befindet sich die Betätigungshülse 20b, in Richtung zum freien Ende betrachtet, in einer definierten, einer Öffnungsstellung zugeordneten Endstellung entgegen dem Uhrzeigersinn, liegt der Steuerring 16b mit ersten Teilabschnitten 40b von Steuerkurven 38b über Arretiermitteln 12b, in denen der Steuerring 16b einen relativ großen Innendurchmesser aufweist, so dass die Arretiermittel 12b nach außen beweglich sind. In Umfangsrichtung sind ca. jeweils um 120° versetzt drei Arretiermittel 12b angeordnet.

Soll ein Werkzeug 34b in das Schnellspannfutter eingeführt werden, wird die Betätigungshülse 20b in die vom freien Ende abgewandte Richtung axial nach hinten gezogen, wodurch über eine Führungshülse 42b in axialer Richtung formschlüssig mit der Betätigungshülse 20b gekoppelte Spannbacken 26b in die vom freien Ende abgewandte Richtung nach hinten und radial nach außen geführt werden. Die Führungshülse 42b ist auf dem Grundkörper 32b axial verschiebbar gelagert und ist über eine Federnutverbindung 80b mit dem Grundkörper 32b drehfest verbunden (Fig. 6). Neben einer Federnutverbindung 80b sind jedoch auch andere, dem Fachmann als sinnvoll erscheinende Verbindungen denkbar.

Ist das Werkzeug 34b zwischen die Spannbacken 26b eingeführt und wird die Betätigungshülse 20b vom Bediener losgelassen, wird dieselbe über eine Schraubendruckfeder 24b in Richtung zum feien Ende des Schnellspannfutters geschoben. Die Schraubendruckfeder 24b ist dabei an einer Abdeckhülse 58b abgestützt und wirkt über einen Haltering 44b auf die Betätigungshülse 20b, die wiederum mit einer Axialkraft über ein Axiallager 56b und über die Führungshülse 42b auf die Spannbacken 26b wirkt. Durch die Axialkraft werden die Spannbacken 26b entlang Schrägflächen von Ausnehmungen in einem Grundkörper 32b radial nach innen geführt und sichern das Werkzeug 34b mit einer kleiner Spannkraft.

Zum manuellen Spannen des Werkzeugs 34b mit einer für den Betrieb ausgelegten Spannkraft wird die Betätigungshülse 20b, in Richtung zum freien Ende betrachtet, im Uhrzeigersinn gedreht. Mit der Betätigungshülse 20b wird der Steuerring 16b, der über eine angeformte Ausnehmung 66b, die Verriegelungsfeder 22b und über eine Ausnehmung 60b am Innenumfang der Betätigungshülse 20b mit derselben gekoppelt ist, relativ zu den Arretiermitteln 12b und zu einer Fixierhülse 36b verdreht, die auf dem Grundkörper 32b axial verschiebbar gelagert und über eine Federnutverbindung 62b drehfest mit dem Grundkörper 32b gekoppelt ist.

Durch die Relativbewegung zwischen dem Steuerring 16b und den Arretiermitteln 12b kommen die Steuerkurven 38b mit zweiten Teilabschnitten 46b über den Arretiermitteln 12b zum Liegen, in denen der Steuerring 16a einen relativ kleinen Innendurchmesser aufweist. Die Arretiermittel 12b werden über den Steuerring 16b mit ihren radial nach innen weisenden, angespitzten Enden jeweils in an einen Außenumfang des Grundkörpers 32b angeformte Verzahnungen 48b gedrückt. In Umfangsrichtung sind ca. jeweils um 120° versetzt drei Verzahnungen 48b an den Grundkörper 32b angeformt, wobei der Grundkörper 32b in Umfangsrichtung zwischen den Verzahnungen 48b Führungsflächen für die Führungshülse 42b und die Fixierhülse 36b bildet. Es wird über die von der Steuervorrichtung 10b steuerbaren Arretiermittel 12b eine Formschlussverbindung 14b zur Aufnahme der Spannabstützkraft hergestellt, und zwar in axialer Richtung zwischen den Arretiermitteln 12b und dem Grundkörper 32b.

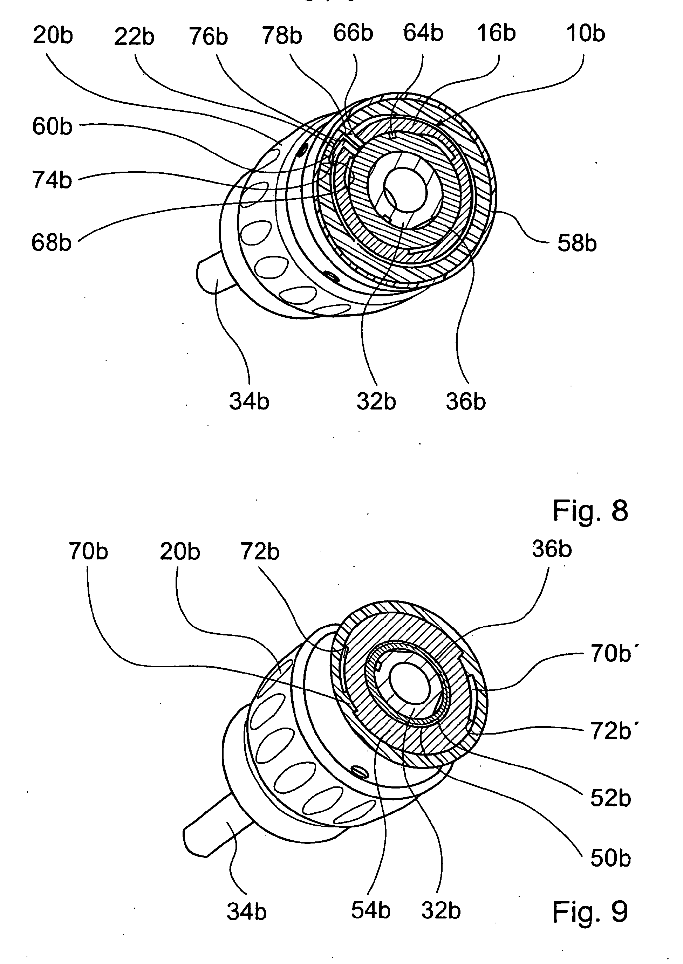

Ist die Fixierhülse 36b über die Arretiermittel 12b in axialer Richtung formschlüssig auf dem Grundkörper 32b fixiert, kommt die Verriegelungsfeder 22b mit einem radial nach innen weisenden Ende über einer Vertiefung 64b der Fixierhülse 36b zum Liegen, rastet in derselben ein und kann mit einer an die Betätigungshülse 20b angeformten und sich an die Ausnehmung 60b anschließenden Schrägfläche 68b überfahren werden, die mit einer an die Verriegelungsfeder 22b angeformten Schrägfläche 74b korrespondiert (Fig. 8). Die Betätigungshülse 20b und der Steuerring 16b werden wirkungsmäßig entkoppelt.

Im Wesentlichen nachdem die Betätigungshülse 20b vom Steuerring 16b entkoppelt ist, kommt die Betätigungshülse 20b über am Innenumfang radial nach innen weisende, angeformte Vorsprünge 70b, 70b' an Anschlagflächen 72b, 72b' einer Spannhülse 54b in Anlage und wird dadurch mit dieser in Drehrichtung, in Richtung zum freien Ende betrachtet, im Uhrzeigersinn gekoppelt (Fig. 9).

Anschließend wird durch die Drehbewegung der Betätigungshülse 20b die Spannhülse 54b relativ zur Fixierhülse 36b verdreht, wobei die Spannhülse 54b über ein angeformtes Innengewinde 50b und über ein Außengewinde 52b der Fixierhülse 36b mit derselben gekoppelt ist.

Die Drehbewegung der Spannhülse 54b führt infolge der Gewinde 50b, 52b zu einer axialen Bewegung der Spannhülse 54b und dieselbe wirkt mit einer Axialkraft über das Axiallager 56b und über die Führungshülse 42b auf die Spannbacken 26b, die entlang der Schrägflächen der Ausnehmungen im Grundkörper 32b radial nach innen gedrückt werden und das Werkzeug 34b spannen.

Zum Lösen des Schnellspannfutters wird die Betätigungshülse 20b, in Richtung zum freien Ende des Schnellspannfutters betrachtet, entgegen dem Uhrzeigersinn gedreht. Die Spannhülse 54b wird in die vom freien Ende abgewandte Richtung geführt, und die Spannkraft wird bis auf die von der Schraubendruckfeder 24b verursachte Spannkraft aufgehoben.

Ferner kommt die Betätigungshülse 20b mit einer an ihren Innenumfang angeformten, sich an die Ausnehmung 60b anschließenden Anschlagfläche 76b an einer Anschlagfläche 78b der Verriegelungsfeder 22b zur Anlage und führt diese aus der Vertiefung 64b, und zwar durch eine Vorspannung der Verriegelungsfeder 22, die in radialer Richtung nach außen wirkt.

Der Steuerring 16b wird über die Verriegelungsfeder 22b mit der Betätigungshülse 20b gekoppelt, die ersten Teilabschnitte 40b der Steuerkurven 38b werden über die Arretiermittel 12b geführt und die Arretiermittel 12b werden in radialer Richtung nach außen freigegeben.

Die Betätigungshülse 20b kann in die vom freien Ende abgewandte Richtung axial nach hinten gezogen und das Schnellspannfutter kann vollständig geöffnet werden, wobei die radial nach innen weisenden, angespitzten Enden der Arretiermittel 12b in der Weise auf die Verzahnungen 48b abgestimmt sind, dass diese beim nach hinten Ziehen der Betätigungshülse 20b überrasten. Dabei sind zwei der Arretiermittel 12b über bügelförmige Federelemente 18b mit einer Federkraft in radialer Richtung nach außen belastet und eines der Arretiermittel 12b ist über ein bügelförmiges Federelement 18b mit einer Federkraft radial nach innen belastet.

Anstatt einzelnen Federelementen 18b ist auch denkbar, dass mehrere Arretiermittel 12b über ein gemeinsames Federelement mit Federkräften belastet werden, beispielsweise über eine ringförmige Drahtfeder usw.

### Bezugszeichen

- 10: Steuervorrichtung
- 12: Arretiermittel
- 14: Formschlussverbindung
- 16: Steuerring
- 18: Federelement
- 20: Betätigungselement
- 22: Verriegelungsfeder
- 24: Federelement
- 26: Spannbacken
- 28: Mittel
- 30: Mittel
- 32: Grundkörper
- 34: Werkzeug
- 36: Fixierhülse
- 38: Steuerkurve
- 40: Teilabschnitt
- 42: Führungshülse
- 44: Haltering
- 46: Teilabschnitt
- 48: Verzahnung
- 50: Innengewinde
- 52: Außengewinde
- 54: Spannhülse
- 56: Axiallager
- 58: Abdeckhülse
- 60: Ausnehmung
- 62: Federnutverbindung
- 64: Vertiefung
- 66: Ausnehmung
- 68: Schrägfläche
- 70: Vorsprung
- 72: Anschlagfläche
- 74: Schrägfläche
- 76: Anschlagfläche
- 78: Anschlagfläche
- 80: Federnutverbindung

## Patentansprüche

1. Schnellspannfutter, insbesondere für eine Handwerkzeugmaschine, mit einem Betätigungselement (20a, 20b) und mit einer Steuervorrichtung (10a, 10b), die zumindest ein Steuermittel (16a, 16b) zur Steuerung zumindest eines Arretiermittels (12a, 12b) umfasst, das zur Aufnahme einer Spannabstützkraft dient, wobei über das von der Steuervorrichtung (10a, 10b) steuerbare Arretiermittel (12a, 12b) eine Formschlussverbindung (14a, 14b) zur Aufnahme der Spannabstützkraft herstellbar ist, **dadurch gekennzeichnet, dass** das Steuermittel (16a, 16b) als Ring ausgeführt ist und relativ zum Arretiermittel (12a, 12b) verdrehbar gelagert ist.

2. Schnellspannfutter nach Anspruch 1, **dadurch gekennzeichnet, dass** das Arretiermittel (12a, 12b) in radialer Richtung bewegbar gelagert ist.

3. Schnellspannfutter nach einem der vorhergehenden Ansprüche, **dadurch gekennzeichnet, dass** das Arretiermittel (12b) in zumindest einer Betriebsstellung durch wenigstens ein Federelement (18b) belastet ist.

4. Schnellspannfutter nach einem der vorhergehenden Ansprüche, **dadurch gekennzeichnet, dass** das Betätigungselement (20a, 20b) zum Spannen eines Werkzeugs (34a, 34b) drehbar gelagert ist.

5. Schnellspannfutter nach einem der vorhergehenden Ansprüche, **dadurch gekennzeichnet, dass** das Betätigungselement (20a, 20b) in axialer Richtung verschiebbar gelagert ist.

6. Schnellspannfutter nach einem der vorhergehenden Ansprüche, **dadurch gekennzeichnet, dass** das Betätigungselement (20b) über zumindest einen Betätigungsbereich vom Steuermittel (16b) der Steuervorrichtung (10b) wirkungsmäßig entkoppelbar ist.

7. Schnellspannfutter nach Anspruch 6, **dadurch gekennzeichnet, dass** das Betätigungselement (20b) über eine Verriegelungsfeder (22b) mit dem Steuermittel (16b) koppel- und entkoppelbar ist.

8. Schnellspannfutter nach Anspruch 7, **dadurch gekennzeichnet, dass** die Verriegelungsfeder (22b) im Wesentlichen eine ringförmige Gestalt aufweist.

9. Schnellspannfutter nach einem der vorhergehenden Ansprüche, **gekennzeichnet durch** zumindest einen in wenigstens einer Betriebsstellung über ein Federelement (24a, 24b) in axialer Richtung belasteten Spannbacken (26a, 26b).

10. Schnellspannfutter nach einem der vorhergehenden Ansprüche, **gekennzeichnet durch** zumindest einen in wenigstens einer Betriebsstellung über ein Mittel (28a, 30a) in radialer Richtung belasteten Spannbacken (26a).

11. Handwerkzeugmaschine mit einem Schnellspannfutter nach einem der vorhergehenden Ansprüche.

## Claims

1. Quick-action chuck, in particular for a portable power tool, having an actuating element (20a, 20b) and having a control device (10a, 10b) which comprises at least one control means (16a, 16b) for controlling at least one arresting means (12a, 12b) which serves to absorb a chucking supporting force, it being possible for a positive-locking connection (14a, 14b) for absorbing the chucking supporting force to be produced via the arresting means (12a, 12b) controllable by the control device (10a, 10b), **characterized in that** the control means (16a, 16b) is designed as a ring and is mounted so as to be rotatable relative to the arresting means (12a, 12b).

2. Quick-action chuck according to Claim 1, **characterized in that** the arresting means (12a, 12b) is mounted so as to be movable in the radial direction.

3. Quick-action chuck according to either of the preceding claims, **characterized in that** the arresting means (12b) is loaded in at least one operating position by at least one spring element (18b).

4. Quick-action chuck according to one of the preceding claims, **characterized in that** the actuating element (20a, 20b) for chucking a tool (34a, 34b) is rotatably mounted.

5. Quick-action chuck according to one of the preceding claims, **characterized in that** the actuating element (20a, 20b) is mounted so as to be displaceable in the axial direction.

6. Quick-action chuck according to one of the preceding claims, **characterized in that** the actuating element (20b) can be functionally uncoupled from the control means (16b) of the control device (10b) via at least one actuating region.

7. Quick-action chuck according to Claim 6, **characterized in that** the actuating element (20b) can be coupled to and uncoupled from the control means (16b) via a locking spring (22b).

8. Quick-action chuck according to Claim 7, **characterized in that** the locking spring (22b) has essentially an annular form.

9. Quick-action chuck according to one of the preceding claims, **characterized by** at least one chuck jaw (26a, 26b) loaded in the axial direction in at least one operating position via a spring element (24a, 24b).

10. Quick-action chuck according to one of the preceding claims, **characterized by** at least one chuck jaw (26a) loaded in the radial direction in at least one operating position via a means (28a, 30a).

11. Portable power tool having a quick-action chuck according to one of the preceding claims.

## Revendications

1. Mandrin à action rapide, en particulier pour une machine-outil portative, comprenant un élément d'actionnement (20a, 20b) et un dispositif de commande (10a, 10b), qui comprend au moins un moyen de commande (16a, 16b) pour la commande d'au moins un moyen d'arrêt (12a, 12b) servant à recevoir la force d'appui du mandrin, le moyen d'arrêt (12a, 12b) commandé par le dispositif de commande (10a, 10b), permettant de réaliser une liaison par complémentarité de formes (14a, 14b) pour recevoir la force d'appui du mandrin,
**caractérisé en ce que**
le moyen de commande (16a, 16b) est un anneau logé de façon rotative par rapport au moyen d'arrêt (12a, 12b).

2. Mandrin à action rapide selon la revendication 1,
**caractérisé en ce que**
le moyen d'arrêt (12a, 12b) est mobile en direction radiale.

3. Mandrin à action rapide selon l'une des revendications précédentes,
**caractérisé en ce que**
le moyen d'arrêt (12b) est sollicité dans au moins une position de fonctionnement par au moins un élément de ressort (18b).

4. Mandrin à action rapide selon l'une des revendications précédentes,
**caractérisé en ce que**
l'élément d'actionnement (20a, 20b), pour le serrage d'un outil (34a, 34b), est logé de façon rotative.

5. Mandrin à action rapide selon l'une des revendications précédentes,
**caractérisé en ce que**
l'élément d'actionnement (20a, 20b) est logé mobile en direction axiale.

6. Mandrin à action rapide selon l'une des revendications précédentes,
**caractérisé en ce que**
l'élément d'actionnement (20b) peut être découplé du moyen de commande (16b) du dispositif de commande (10b), en termes d'effet sur au moins une zone d'actionnement.

7. Mandrin à action rapide selon la revendication 6,
**caractérisé en ce que**
l'élément d'actionnement (20b) peut être couplé et découplé avec le moyen de commande (16b) par un ressort de verrouillage (22b).

8. Mandrin à action rapide selon la revendication 7,
**caractérisé en ce que**
le ressort de verrouillage (22b) présente pour l'essentiel une forme annulaire.

9. Mandrin à action rapide selon l'une des revendications précédentes,
**caractérisé par**
au moins une mâchoire de serrage (26a, 26b) sollicitée en direction axiale dans au moins une position de fonctionnement par un élément de ressort (24a, 24b).

10. Mandrin à action rapide selon l'une des revendications précédentes,
**caractérisé par**
au moins une mâchoire de serrage (26a) sollicitée en direction radiale dans au moins une position de fonctionnement par un moyen (28a, 30a).

11. Machine-outil portative comprenant un mandrin à action rapide selon l'une des revendications précédentes.
